# EUROPEAN PATENT APPLICATION

(11) **EP 4 560 742 A1**
(43) Date of publication of application: **28.05.2025**
(21) Application number: 24172543.1
(22) Date of filing: 25.04.2024
(51) Int. Cl.: H01M 8/04029, H01M 8/04089, H01M 8/04746

(54) **A COOLING SYSTEM FOR A VEHICLE FUEL CELL WITH AN AUTOMATIC PRESSURE EQUALIZATION DEVICE AND A METHOD OF ADJUSTING A COOLANT PRESSURE**

(30) Priority: 23.11.2023 EP 23211861
(71) Applicant: VOLVO TRUCK CORPORATION, 405 08 Göteborg (SE)
(72) Inventor: ARYA, Pranav, 412 85 GÖTEBORG (SE); LEMAITRE, Guillaume, 413 20 GÖTEBORG (SE)
(74) Representative: Ström & Gulliksson AB

(57) **Abstract**

A cooling system (1) for a vehicle fuel cell system (100), the cooling system (1) comprising a cooling circuit (10) and a pressure equalization device (20) for a coolant of the cooling circuit (10), wherein the pressure equalization device (20) is configured to automatically adjust the coolant pressure.

## Description

### TECHNICAL FIELD

The disclosure relates generally to fuel cell systems. In particular aspects, the disclosure relates to a cooling system for a vehicle fuel cell system, the cooling system comprising an automatic pressure equalization device. The disclosure can be applied to heavy-duty vehicles, such as trucks, buses, and construction equipment, among other vehicle types.

### BACKGROUND

Fuel cell systems are typically cooled by a coolant in a certain pressure range to avoid internal high pressure differences between the coolant, a cathode gas and an anode gas. High pressure differences may lead to damages and loss of performance or leakages. Prior art solutions for coolant pressure adjustment are marred with various drawbacks such as complex, bulky and expensive design.

### SUMMARY

According to a first aspect of the disclosure, there is provided a cooling system for a vehicle fuel cell system, the cooling system comprising a cooling circuit and a pressure equalization device for a coolant of the cooling circuit, wherein the pressure equalization device is configured to automatically adjust the coolant pressure.

The first aspect of the disclosure may seek to solve the problem of providing a highly accurate, rapid, compact and flexible solution for coolant pressure adjustment. The highly accurate and rapid adjustment may ensure high fuel cell efficiency and long life. Since the pressure equalization device is adjustable, its vertical installation position in relation to the vehicle fuel cell system is flexible. In other words, the pressure equalization device may be positioned vertically lower than, vertically higher than, or at the same vertical height as the vehicle fuel cell system. The pressure equalization device may be a stationary pressure equalization device, meaning that the pressure equalization device may remain stationary, i.e. spatially unmoved, while it adjusts the coolant pressure. More precisely, the pressure equalization device is automatically adjustable to adjust the coolant static pressure. The pressure equalization device may also be referred to as an automatic pressure equalization device.

Optionally in some examples, including in at least one preferred example, the pressure equalization device comprises a drive, such as an electric motor, for automatically adjusting the coolant pressure. In the present disclosure, the expression automatically adjust may mean adjust by means of a drive. In more detail, the expression automatically adjust may mean adjust by means of a drive that is operated by a control unit. The drive may for example be electric, hydraulic or pneumatic.

Optionally in some examples, including in at least one preferred example, the pressure equalization device comprises a first portion, a second portion, and a separator that is arranged to separate the first portion and the second portion. The first portion may contain air or gas and may be referred to as a gas portion. The second portion is adapted to be in fluid communication with the cooling circuit. The second portion may thus contain coolant and may be referred to as a liquid portion. Such a pressure equalization device may function as an expansion tank or an expansion vessel. Typically, the separator is liquid tight or fluid tight. A force may act on the separator to adjust the coolant pressure.

For example, the first portion of the pressure equalization device may be adapted to be in fluid communication with an exhaust of the vehicle fuel cell system, such that an exhaust pressure may act on the separator to thereby continuously adjust the coolant pressure. The first portion may thus be referred to as an exhaust gas portion. As the exhaust pressure may increase with increasing load of the fuel cell system, the coolant pressure may by means of the present pressure equalization device automatically increase as the load increases. Thereby, the coolant pressure may beneficially be automatically adjusted to a cathode gas and/or an anode gas of the fuel cell system.

Optionally in some examples, including in at least one preferred example, the pressure equalization device is configured such that the separator may be pre-tensioned towards the first portion or towards the second portion. In other words, the separator may be pre-tensionable towards the first portion or towards the second portion. Thus, the pressure equalization device may selectively increase the coolant pressure or decrease the coolant pressure. The pre-tension may be independent from any force affecting the separator as a result of a fluid communication between the first portion and the exhaust. Said pre-tension may be referred to as a pre-tension force. Thus, the separator may in parallel be affected by the pre-tension and by any force resulting from the exhaust. The separator may in parallel be affected by the pre-tension force and any force from the exhaust. The pre-tension of the separator may be achieved by the pressure equalization device comprising a resilient member or by the separator being resilient.

Optionally in some examples, including in at least one preferred example, the pressure equalization device comprises an automatic pressurizing assembly that is adapted to automatically adjust the pre-tension of the separator. The automatic pressurizing assembly may pre-tension the separator to selectively adjust the coolant pressure, independently from any force from the exhaust that affect the separator. The automatic pressurizing assembly may alternatively be referred to as an automatic pre-tensioning assembly.

Optionally in some examples, including in at least one preferred example, the pressure equalization device, or automatic pressure equalization device, comprises a drive, such as an electric motor, for adjusting the pre-tension of the separator. The drive may alternatively be hydraulic or pneumatic.

Optionally in some examples, including in at least one preferred example, the automatic pressurizing assembly comprises a threaded actuator for adjusting the pre-tension of the separator. The pressure equalization device may be configured such that the threaded actuator may be automatically operated. A threaded actuator may facilitate automatic operation and may allow a precise adjustment of the coolant pressure. Other advantages involve low cost and high reliability. For example, a threaded actuator may be turned by a rotary drive and the rotational movement may be translated to a linear or translational movement of the separator. Rotating the threaded actuator in one rotational direction may pre-tension the separator towards the first portion and rotating the threaded actuator in the opposite rotational direction may pre-tension the separator towards the second portion. The threaded actuator may be directly or indirectly connected to the separator.

Optionally in some examples, including in at least one preferred example, the automatic pressurizing assembly comprises a resilient member that is arranged to pre-tension the separator, wherein a rotation of the threaded actuator adjusts a pre-tension of the resilient member. Such a solution may be cost-effective and reliable. The resilient member may for example be a spring, e.g. a compression spring. The automatic pressure equalization device may alternatively be referred to as an automatically adjustable spring-loaded exhaust/coolant pressure equalizer for a fuel cell system, or an automatically adjustable spring-loaded air/coolant pressure equalizer for a fuel cell system.

Optionally in some examples, including in at least one preferred example, the pressure equalization device is configured such that the separator may be affected by a pressure of the exhaust and in addition be affected by the automatic pressurizing assembly. Thereby, the coolant pressure may be automatically adjusted by pressure of the exhaust and in addition be automatically adjusted by the automatic pressurizing assembly. For example, the separator may comprise an area that is affected by the pressure (force per unit area) of the exhaust and may in addition comprise an assembly interface via which the automatic pressurizing assembly may apply a pre-tension force to the separator. The assembly interface may be positioned centrally on the separator.

Optionally in some examples, including in at least one preferred example, the separator essentially has the shape of a piston. As is known to persons skilled in the art, a piston may comprise an area that is affected by a pressure. Referring to the above paragraph, the separator optionally in the shape of a piston may comprise an assembly interface via which the automatic pressurizing assembly may apply a pre-tension force to the piston. Advantageously, to align the force resulting from the area being affected by the pressure with the force of the automatic pressurizing assembly, the assembly interface may be positioned centrally on the piston. In a cost-effective and reliable solution, the separator essentially has the shape of a piston and the pressure equalization device comprises an elongated housing, wherein the separator and the housing function as a cylinder and a piston.

Optionally in some examples, including in at least one preferred example, the pressure equalization device comprises an exhaust interface for connection to an exhaust of the vehicle fuel cell system. Such an interface may facilitate connecting the first portion of the pressure equalization to the exhaust of the vehicle fuel cell system. For example, the exhaust interface may be a through-opening in the pressure equalization device. An attachment interface may be arranged at the through-opening for connection of a hose or pipe that leads to the exhaust of the vehicle fuel cell system.

Optionally in some examples, including in at least one preferred example, the exhaust interface is connected to the first portion, also referred to as the exhaust gas portion. The exhaust gas portion may be an upper portion or upper half of the pressure equalization device, such that the coolant of the second portion (liquid portion) of the pressure equalization device is kept vertically below the exhaust gas portion by gravity.

Optionally in some examples, including in at least one preferred example, the pressure equalization device comprises a circuit interface for connection to the cooling circuit, wherein the circuit interface is connected to the second portion. Referring to the above paragraph, the circuit interface may be positioned vertically below the exhaust interface. The exhaust interface may be positioned vertically above than the separator.

Optionally in some examples, including in at least one preferred example, the cooling system comprises, or is connected to, a control unit that is able to determine a coolant pressure requirement of the vehicle fuel cell system and is able to operate the automatic pressure equalization device based on said coolant pressure requirement.

A fuel cell system may comprise components that are susceptible to damages as a result of insufficient coolant pressure adjustment. It may be beneficial to adjust the coolant pressure to thereby reduce any pressure difference between the coolant and e.g. hydrogen or air within said pressure difference sensitive components. In addition, under certain conditions, such as during warm-up, a high coolant flow may be desirable to reduce the time required for starting up the fuel cell system. Moreover, a high coolant flow may also be beneficial for aged fuel cell systems, where the heat rejection may be higher. Thus, in some operating modes and in some conditions, it may be beneficial to reduce the (static, see below) coolant pressure to provide the possibility of increasing the coolant flow.

The total pressure of the coolant, which total pressure may result in an undesired pressure difference, is the sum of the coolant static pressure and the coolant dynamic pressure. When the pressure equalization device lowers the coolant static pressure, the coolant dynamic pressure may be allowed to increase, while keeping the total coolant pressure at the same level. Thus, when the pressure equalization device lowers the coolant static pressure, the coolant flow rate may be increased. Typically, a coolant pump speed may be increased.

A fuel cell system that has been exposed to low temperatures for prolonged duration (e.g. overnight), may need to be warmed up before starting up to ensure that there are no ice plugs leading to blockages. During a warmup phase, typically neither fuel nor air are supplied to the fuel cell system. Therefore, typically, no pressure resulting from a connection to an exhaust of the fuel cell system is added to the pressure equalization device during warm-up. Warm-up of a fuel cell system may involve circulating coolant, typically heated coolant, through the fuel cell system. The higher the flow rate of the coolant, the faster the warm-up. Again, if the pressure equalization device lowers the coolant static pressure during warm-up, the coolant flow rate may be increased. In particular, at low temperatures the viscosity of the coolant may be high which leads to a relatively high pressure drop through the cooling circuit. In such a scenario, it may be particularly beneficial to lower the coolant static pressure.

Furthermore, the present pressure equalization device may be beneficial for allowing an increased coolant flow as the fuel cell system reaches the end of life. As a fuel cell system gets older, the efficiency of the system decreases, and more heat is rejected from the system. This may require more cooling and therefore higher coolant flow rate. I addition, piece to piece variations in different component of a fuel cell system may lead to differences in optimum coolant static pressure. A pressure setting for the present pressure equalization device may be identified using pressure sensors in the air, coolant and hydrogen circuits.

In an operating mode that involves a high coolant pressure requirement, such as the fuel cell system operating running at high or maximum output, it may be beneficial to increase the coolant static pressure by means of the pressure equalization device. The resulting increased total coolant pressure may be required to balance high fuel or air pressures. The coolant pump may not be able to increase the dynamic coolant pressure to a sufficient high level to obtain a sufficient total coolant pressure.

According to a second aspect of the disclosure, there is provided a vehicle fuel cell system comprising the cooling system.

According to a third aspect of the disclosure, there is provided a multiple vehicle fuel cell system comprising a first vehicle fuel cell system, a second vehicle fuel cell system and the cooling system. By multiple vehicle fuel cell system is meant a system that comprises at least two fuel cell systems. The provision of at least two fuel cell systems, instead of one fuel cell system, may be advantageous for reliability or uptime. Advantageously, the cooling circuit may be a single cooling circuit for the first and the second vehicle fuel cell systems. Thereby, the single automatic pressure equalization device may adjust the coolant pressure on the basis of individual coolant pressure requirements of the vehicle fuel cell systems. The multiple vehicle fuel cell system may in a cost effective and compact manner comprise one single cooling circuit.

According to a fourth aspect of the disclosure, there is provided a vehicle comprising the vehicle fuel cell system or the multiple vehicle fuel cell system.

According to a fifth aspect of the disclosure, there is provided a method of adjusting a coolant pressure of a cooling circuit for a vehicle fuel cell system comprising automatically adjusting a pressure equalization device. For example, the pressure equalization device may be of the type described herein. The method may be computer-implemented.

Optionally in some examples, including in at least one preferred example, automatically adjusting the pressure equalization device comprises operating a drive such as an electric motor.

Optionally in some examples, including in at least one preferred example, the method comprises obtaining from a control unit a coolant pressure requirement of the vehicle fuel cell system and on the basis thereof automatically adjusting the pressure equalization device.

Optionally in some examples, including in at least one preferred example, the cooling circuit is a single cooling circuit for a first and a second vehicle fuel cell system and automatically adjusting the pressure equalization device comprises adjusting the coolant pressure on the basis of individual coolant pressure requirements of the first and the second vehicle fuel cell systems.

Optionally in some examples, including in at least one preferred example, automatically adjusting the coolant pressure by adjusting the pressure equalization device comprises setting the coolant pressure between the coolant pressure requirement of the first vehicle fuel cell system and the coolant pressure requirement of the second vehicle fuel cell system. Thus, in this manner, the coolant pressure may be adjusted to a pressure that is appropriate for both the first fuel cell system and the second fuel cell system.

Optionally in some examples, including in at least one preferred example, the cooling circuit is connected to an exhaust of the first vehicle fuel cell system and the method comprises continuously adjusting the coolant pressure by the cooling circuit being connected to the exhaust of the first vehicle fuel cell system, as the pressure of the exhaust may continuously vary during operation.

Optionally in some examples, including in at least one preferred example, the cooling circuit is not connected to an exhaust of the second vehicle fuel cell system. By the connection to one of the fuel cell systems only, a cost-effective solution with simplified assembly is achieved.

As regards further possible features of the second to fifth aspects, and associated advantages, reference is made to the herein provided description of the first aspect.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
**FIG. 1** is a schematic illustration of a cooling system and a pressure equalization device for a vehicle fuel cell system according to an example.
**FIG. 2** shows the pressure equalization device of **FIG. 1** in more detail.
**FIG. 3** is an exemplary system diagram of the cooling system in accordance with the one of **FIG. 1****,** but adapted for two fuel cell systems.
**FIG. 4** is a flow chart of an exemplary method of adjusting a coolant pressure of a cooling circuit for a vehicle fuel cell system, the method comprising automatically adjusting a pressure equalization device similar to the one of **FIG. 1** to **3****.**

### DETAILED DESCRIPTION

The detailed description set forth below provides information and examples of the disclosed technology with sufficient detail to enable those skilled in the art to practice the disclosure.

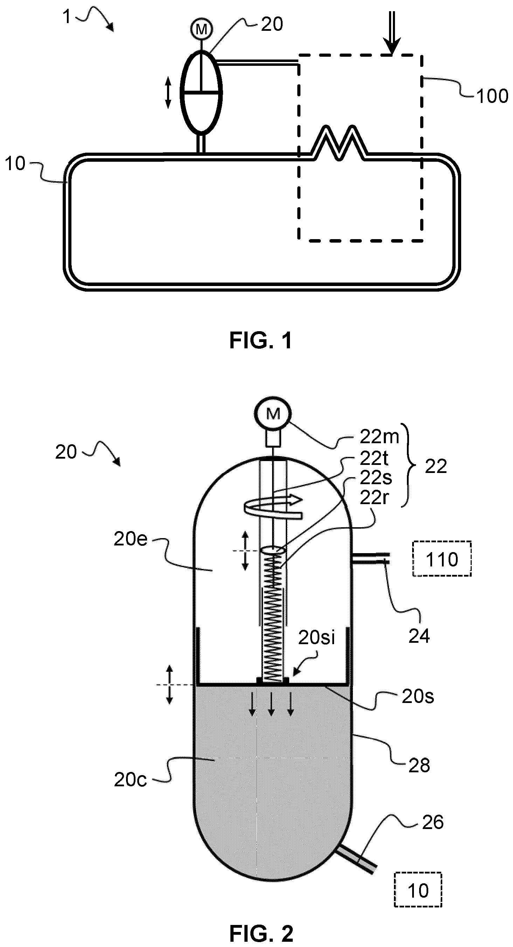

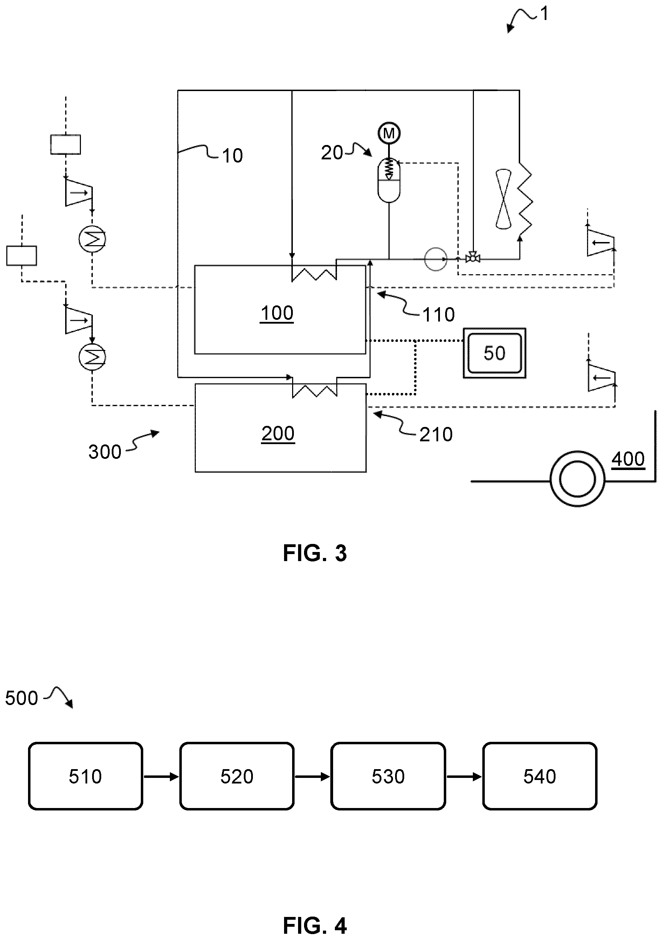

**FIG. 1** illustrates a cooling system 1 for a vehicle fuel cell system 100 (indicated as a dashed rectangle). The cooling system 1, exemplarily connected to two vehicle fuel cell system 100, 200, is shown in more detail in **FIG. 3****.** Herein, the vehicle fuel cell systems 100, 200 per se are only schematically depicted and not illustrated or described in detail, as the disclosure primarily relates to cooling thereof. As is illustrated in **FIG. 1** and **FIG. 3****,** the cooling system 1 comprises a single cooling circuit 10 for the fuel cell system(s). In other words, one and the same single cooling circuit 10 may be connected to one or two fuel cell systems 100, 200. The cooling circuit 10 is illustrated as passing through the fuel cell systems 100, 200 to transfer heat by means of schematically illustrated heat changers. Typically, the cooling circuit 10 passes through undepicted fuel cell stacks of the fuel cell systems 100, 200 to remove or supply heat. The cooling system 1 may comprise a pump, a heat exchanger and an airflow generator as is illustrated to the right in **FIG. 3****.** The heat exchanger may be a radiator, and the airflow generator may e.g. be a fan or a blower. There may further be provided a three-way valve and a bypass line for fully or partly bypassing the heat exchanger, e.g. during warm-up, see **FIG. 3****.** The coolant pressure may be adjusted by adjustment of the pump speed, but the present disclosure primarily relates to adjustment of the coolant pressure by means of a pressure equalization device.

In **FIG. 3****,** a solid line (e.g. denoted 10) represents a coolant flow line or cooling circuit. A dashed line represents a cathode supply line and cathode exhaust line, or more generally an air or gas flow line, and a dotted line represents a communication, e.g. a wired or a wireless communication.

The cooling systems 1 illustrated in **FIG. 1** and **FIG. 3** comprise a pressure equalization device 20, which is shown in more detail in **FIG. 2****.** The pressure equalization device 20 is configured to automatically adjust the coolant pressure. In the present example, the pressure equalization device 20 comprises a first portion 20e, a second portion 20c and a separator 20s that is arranged to separate the first portion 20e and the second portion 20c. The first portion 20e may, as is illustrated, be adapted to be in fluid communication with an exhaust 110 of the vehicle fuel cell system 100. The second portion 20e is adapted to be in fluid communication with the cooling circuit 10.

As is best understood from **FIG. 2****.** The pressure equalization device 20 may be configured such that the separator 20s may be pre-tensioned towards the first portion 20e or towards the second portion 20c.

As will be described in more detail, in the present example gas (exhaust) and coolant are separated by the separator 20s in the form of a piston which may be pressed by a resilient member 22r in the form of a spring. The spring compression may be adjusted by a threaded actuator 22t in the form of an infinite screw which changes the vertical position of one end, here an upper end, of the resilient member 22r e.g. via a seat 22s. The threaded actuator 22t may be automatically adjusted by a drive, in the present example an electric motor 22m, until the desired coolant static pressure is reached. Referring still to **FIG. 2****,** the pre-tension is independent from any force affecting the separator 20s as a result of a fluid communication between the first portion 20e and the exhaust 110.

Thus, the present pressure equalization device 20 comprises an automatic pressurizing assembly 22 that is adapted to automatically adjust the pre-tension of the separator 20s, to adjust the coolant static pressure. In the present example, the pressurizing assembly 22 comprises a threaded actuator 22t for adjusting the pre-tension of the separator 20s, and the pressure equalization device 20 is configured such that the threaded actuator 22t may be automatically operated. More precisely, the threaded actuator 22h may comprise a drive interface (in the present example comprised in the upper end of the threaded actuator 22h) that may be connected to a drive such that the threaded actuator 22h may be rotated the drive.

As is shown, the threaded actuator 22t may cooperate with a seat 22s, or spring seat, which may move axially within the housing 28 of the present pressure equalization device 20 as the threaded actuator 22t is rotated by the drive. The resilient member (in this case a compression spring) 22r may be arranged between the seat 22s and the separator 20s. More precisely, one end of the resilient member 22r may be attached to an assembly interface 20si of the separator 20s. As is also shown, the pressure equalization device 20 may comprise a resilient member guide that is arranged to guide the resilient member 22r to avoid the resilient member 22r bending or buckling. In the present example, the resilient member guide comprises two telescoping tubes. An upper tube is attached to an upper end of the pressure equalization device 20 and a lower tube is attached to the assembly interface 20si, see **FIG. 2****.**

Referring the preceding paragraph, the pressurizing assembly 22 may comprise a resilient member 22r that is arranged to pre-tension the separator 20s, wherein rotating the threaded actuator 22t adjusts a pre-tension of the resilient member 22r.

As a result of a connection to an exhaust 110 of the vehicle fuel cell system 100, the pressure equalization device 20 may be configured such that the separator 20s may be affected by a pressure of the exhaust 110 and in addition be affected by the pressurizing assembly 22.

As has been mentioned and as is illustrated in **FIG. 2****,** the separator 20s may essentially have the shape of a piston. Thus, the separator 20s may be movable. The pressure equalization device 20 may comprise an elongated housing 28 within which the separator 20s (piston) may travel. As is shown, the piston 20s may comprise a central assembly interface 20si to which the pressurizing assembly 22 may be attached. The pressurizing assembly 22 may selectively push and pull the separator 20s (piston). The piston 20s may be of circular cross-section and the housing 28 may be circular cylindrical, optionally with opposing domed ends (as disclosed).

Referring in particular to **FIG. 2****,** the present pressure equalization device 20 comprises an exhaust interface 24 for connection to an exhaust 110 of the vehicle fuel cell system 100. The exhaust interface 24 may comprise a through-hole in the housing 28. Typically, the exhaust interface 24 is connected to the first portion 20e of the pressure equalization device 20. In the present example, the exhaust interface 24 is positioned vertically higher than the separator 20s, more precisely vertically higher than the separator 20s may travel. Furth, the present pressure equalization device 20 comprises a cooling circuit interface or circuit interface 26 for connection to the cooling circuit 10. The circuit interface 26 is connected to the second portion 20c of the pressure equalization device 20. In the present example, the circuit interface 26 is positioned vertically lower than the separator 20s, more precisely vertically lower than the separator 20s may travel.

As is illustrated in **FIG. 3****,** the cooling system 1 may comprise a control unit 50 that is able to determine a coolant pressure requirement of the vehicle fuel cell system 100 and to output a signal that is indicative of a suitable setting for the automatically adjustable pressure equalization device 20. Alternatively, the cooling system 1 may be connected to such a control unit 50, which does not form part of the cooling system 1.

As is to be apprehended, the cooling systems 1 herein described may form part of a vehicle fuel cell system 100. Referring again to **FIG. 3****,** such a vehicle fuel cell system 100 may form part of a multiple vehicle fuel cell system 300 comprising also a second vehicle fuel cell system 200 and the cooling system 1. The cooling circuit 10 may be a single cooling circuit that serves several vehicle fuel cell systems 100, 200 of a multiple vehicle fuel cell system 300. As is indicated in **FIG. 3** (bottom right corner), the vehicle fuel cell systems 100, 200 or multiple vehicle fuel cell system 300 may be comprised in a vehicle 400.

As has been mentioned, fuel cell systems 100, 200 typically each comprise undepicted fuel cell stacks. These typically comprise bipolar plates, electrical connections, inputs and outputs for cathode gas (typically air) and anode gas (such as hydrogen). The bipolar plates may be particularly susceptible to damages as a result of insufficient coolant pressure adjustment. In **FIG. 3****,** is illustrated the anode gas flow to and from the fuel cell systems 100, 200. To the left in **FIG. 3****,** anode gas, in this case ambient air, enters into a respective air intake of the fuel cell systems. Air filters (indicated as rectangular boxes) are arranged downstream the respective air intakes. Next, the air passes through respective blowers or compressors (indicated as trapezoids), before passing through respective optional supply air coolers (indicated as circles) and entering into the respective fuel cell systems 100, 200. Inside the fuel cell systems 100, 200, the air reacts with the fuel to create electric energy, used e.g. to propel the vehicle or heavy-duty vehicle 400. The air then exits the fuel cell systems 100, 200 through the first vehicle fuel cell system exhaust 110 and the second vehicle fuel cell system exhaust 210, respectively. As is shown (right in **FIG. 3****),** first and second turbines may be arranged to harvest energy from the first and second vehicle fuel cell system exhausts 110, 210. The first exhaust 110 is connected to the pressure equalization device 20. More precisely, an air flow line extends from between first exhaust 110 and the first turbine inlet to the pressure equalization device 20. There may be undepicted coolant lines connecting the supply air coolers to the cooling circuit 10.

Referring next to **FIG. 4****,** and also the herein described apparatuses, a method 500 of adjusting a coolant pressure of a cooling circuit 10 for a vehicle fuel cell system 100 comprises automatically adjusting 540 a pressure equalization device 20. Typically, automatically adjusting 540 the pressure equalization device 20 comprises operating an actuator 22t for example by means of a drive 22m of the pressure equalization device 20. The actuator 22t may for example be a threaded actuator 22t in the form of an infinite screw as described herein. Thus, automatically adjusting 540 the pressure equalization device 20 may comprise rotating the actuator 22t by operating the drive 22m.

Further, the method 500 may comprise obtaining 530, from a control unit 50, a coolant pressure requirement of the vehicle fuel cell system 100 and on the basis thereof automatically adjusting 540 the pressure equalization device 20. The cooling circuit 10 may be a single cooling circuit 10 for a first and a second vehicle fuel cell system 100, 200 and automatically adjusting 540 the pressure equalization device 20 may comprise adjusting the coolant pressure on the basis of individual coolant pressure requirements of the first and the second vehicle fuel cell systems 100, 200.

In some examples, automatically adjusting 540 the coolant pressure by automatically adjusting 540 the pressure equalization device 20 comprises setting the coolant pressure between the coolant pressure requirement of the first vehicle fuel cell system 100 and the coolant pressure requirement of the second vehicle fuel cell system 200.

As is shown in **FIG. 3****,** in accordance with the present disclosure the cooling circuit 10 may be connected to an exhaust 110 of the first vehicle fuel cell system 100 and the method 500 may comprise continuously adjusting 520 the coolant pressure by the cooling circuit 10 being connected to the exhaust 110 of the first vehicle fuel cell system 100. The coolant pressure may be continuously adjusted as the pressure of the exhaust 110 may continuously vary during operation. Thus, continuously adjusting 520 the coolant pressure may involve that the coolant pressure is adapted in dependence of the pressure of the exhaust 110.

Referring again to **FIG. 3****,** the cooling circuit 10 needs not be connected to an exhaust 210 of the second vehicle fuel cell system 200. Different coolant pressure requirements of the first and the second fuel cell systems 100, 200 may be caused by variation in performance and/or state of health. Typically, the coolant pressure requirement of a fuel cell system may increase with load. Higher load results in higher exhaust pressure and thus, in accordance with the present disclosure, higher coolant pressure (since the pressure equalization device 20 connected to the exhaust 110). Now, the first fuel cell system 100 may have a first pressure corridor, meaning acceptable lower and higher coolant pressures for each load point. Similarly, the second fuel cell system 200 may have a second pressure corridor, which may differ from the first pressure corridor e.g. because of a variation in state of health between the fuel cell systems 100, 200. By adjusting the pressure equalization device 20, the coolant pressure may be adjusted to be within both the first and the second pressure corridors. The present pressure equalization device 20 thus allows the cooling circuit 10 being connected to the exhaust 110 of the first vehicle fuel cell system 100 only. In undepicted embodiment, the cooling circuit 10 may instead be connected to the exhaust 210 of the second vehicle fuel cell system 200 only.

Referring still to **FIG. 3****,** the method 500 typically comprises running 510 the first and second vehicle fuel cell systems 100, 200. Further, if the first portion 20e is in fluid communication with the exhaust 110 of the vehicle fuel cell system 100, the method 500 may comprise continuously adjusting 520 the coolant pressure by means of the communication with the exhaust 110.

A method of adjusting a coolant pressure of a single cooling circuit 10 for a first and a vehicle second fuel cell system 100, 200 is next described with reference to **FIG. 3****.** The method may for example be applied to the herein described vehicle fuel cell systems 100, 200 and cooling system 1 and to simplify understanding the method is described also with reference to the example of **FIG. 1** to **FIG. 3****.** Thus, the cooling circuit 10 is connected to the exhaust 110 of the first vehicle fuel cell system 100 but not connected to the exhaust 210 of the second fuel cell system 200.

The method comprises running the first and second vehicle fuel cell systems 100, 200, and meanwhile continuously adjusting the coolant pressure by the cooling circuit 10 being connected to the exhaust 110 of the first vehicle fuel cell system 100.

As has been described, the pressure equalization device 20 is connected to the cooling circuit 10 and the method may thus comprise adjusting the coolant pressure by adjusting the pressure equalization device 20. Thus, the coolant pressure may be adjusted in two separate ways, firstly by the connection the exhaust 110 and secondly by the pressure equalization device 20 being adjusted by operating the drive means 22m. In addition, as mentioned, the coolant pressure may be adjusted by adjustment of the coolant pump speed, which is not described in further detail herein. The adjustment of the coolant pressure by the connection the exhaust 110 may be referred to as an exhaust automatic coolant pressure adjustment. The adjustment of the coolant pressure by adjusting the pressure equalization device 20 may be referred to as a device automatic coolant pressure adjustment.

Adjusting the coolant pressure by adjusting the pressure equalization device 20 may comprise adjusting the coolant pressure on the basis of individual coolant pressure requirements of the first and the second vehicle fuel cell systems 100, 200. In more detail, adjusting the coolant pressure by adjusting the pressure equalization device 20 may comprise adjusting or setting the coolant pressure between the coolant pressure requirement of the first vehicle fuel cell system 100 and the coolant pressure requirement of the second vehicle fuel cell system 200.

The method may further comprise, referring again to the descripting of the example of **FIG. 3****,** obtaining, from the control unit 50, individual coolant pressure requirements of the first and the second vehicle fuel cell systems 100, 200 and on the basis thereof adjusting the coolant pressure by adjusting the pressure equalization device 20. The coolant pressure requirements may for example depend on fuel cell load, fuel cell state of health, fuel cell performance and fuel cell age.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Also disclosed are examples according to the following clauses:
1. A cooling system (1) for a vehicle fuel cell system (100), the cooling system (1) comprising a cooling circuit (10) and a pressure equalization device (20) for a coolant of the cooling circuit (10), wherein the pressure equalization device (20) is configured to automatically adjust the coolant pressure.
2. The cooling system (1) of clause 1, wherein the pressure equalization device (20) comprises a drive (22m), such as an electric motor, for automatically adjusting the coolant pressure.
3. The cooling system (1) of clause 1 or 2, wherein the pressure equalization device (20) comprises
   - a first portion (20e) adapted to be in fluid communication with an exhaust (110) of the vehicle fuel cell system (100),
   - a second portion (20c) adapted to be in fluid communication with the cooling circuit (10), and
   - a separator (20s) that is arranged to separate the first portion (20e) and the second portion (20c).
4. The cooling system (1) of clause 3, wherein the pressure equalization device (20) is configured such that the separator (20s) may be pre-tensioned towards the first portion (20e) or towards the second portion (20c), said pre-tension being independent from any force affecting the separator (20s) as a result of a fluid communication between the first portion (20e) and the exhaust (110).
5. The cooling system (1) of clause 3 or 4, wherein the pressure equalization device (20) comprises an automatic pressurizing assembly (22) that is adapted to automatically adjust the pre-tension of the separator (20s).
6. The cooling system (1) of clause 5, wherein the automatic pressurizing assembly (22) comprises a drive (22m), such as an electric motor, for adjusting the pre-tension of the separator (20s).
7. The cooling system (1) of clause 5 or 6, wherein the automatic pressurizing assembly (22) comprises a threaded actuator (22t) for adjusting the pre-tension of the separator (20s), wherein the pressure equalization device (20) is configured such that the threaded actuator (22t) may be automatically operated.
8. The cooling system (1) of clause 7, wherein the automatic pressurizing assembly (22) comprises a resilient member (22r) that is arranged to pre-tension the separator (20s), wherein a rotation of the threaded actuator (22t) adjusts a pre-tension of the resilient member (22r).
9. The cooling system (1) according to any of clauses 5 to 8, wherein the pressure equalization device (20) is configured such that the separator (20s) may be affected by a pressure of the exhaust (110) and in addition by the automatic pressurizing assembly (22).
10. The cooling system (1) according to clause 3 and any preceding clause, wherein the separator (20s) essentially has the shape of a piston.
11. The cooling system (1) according to any of clauses 3 to 7, wherein the separator (20s) essentially has the shape of a piston and the pressure equalization device (20) comprises an elongated housing (28), and wherein the separator (20s) and the housing (28) function as a cylinder and a piston.
12. The cooling system (1) of clause 5 or 6 and 10 or 11, wherein the separator (20s) comprises an assembly interface (20si) for attachment of the automatic pressurizing assembly (22).
13. The cooling system (1) of any preceding clause, wherein the pressure equalization device (20) comprises an exhaust interface (24) for connection to an exhaust (110) of the vehicle fuel cell system (100).
14. The cooling system (1) of clause 3 or 4 and clause 13, wherein the exhaust interface (24) is connected to the first portion (20e).
15. The cooling system (1) of clause 14, wherein the pressure equalization device (20) comprise a circuit interface (26) for connection to the cooling circuit (10), and wherein the circuit interface (26) is connected to the second portion (20c).
16. The cooling system (1) of clause 15, wherein the exhaust interface (24) is positioned vertically higher than the separator (20s) and the circuit interface (26) is positioned vertically lower that the separator (20s).
17. The cooling system (1) of any preceding clause, comprising or connected to a control unit (50) that is able to determine a coolant pressure requirement of the vehicle fuel cell system (100) and is able to operate the pressure equalization device (20) based on the coolant pressure requirement.
18. A vehicle fuel cell system (100) comprising the cooling system (1) of any preceding clause.
19. A multiple vehicle fuel cell system (300) comprising a first vehicle fuel cell system (100), a second vehicle fuel cell system (200) and the cooling system (1) according to any of clauses 1 to 17.
20. The multiple vehicle fuel cell system (300) of clause 19, comprising a single cooling circuit (10).
21. A vehicle (400) comprising the vehicle fuel cell system (100) of clause 18 or the multiple vehicle fuel cell system (300) of clause 19 or 20.
22. A method (500) of adjusting a coolant pressure of a cooling circuit (10) for a vehicle fuel cell system (100) comprising automatically adjusting (540) a pressure equalization device (20).
23. The method (500) of clause 22, wherein automatically adjusting (540) the pressure equalization device (20) comprises operating a drive (22m) such as an electric motor.
24. The method (500) according to clause 22 or 23, comprising obtaining (530) from a control unit (50) a coolant pressure requirement of the vehicle fuel cell system (100) and on the basis thereof automatically adjusting (540) the pressure equalization device (20).
25. The method (500) according to any of clauses 22 to 24, wherein the cooling circuit (10) is a single cooling circuit (10) for a first and a second vehicle fuel cell system (100, 200) and automatically adjusting (540) the pressure equalization device (20) comprises adjusting the coolant pressure on the basis of individual coolant pressure requirements of the first and the second vehicle fuel cell systems (100, 200).
26. The method (500) of clause 25, wherein automatically adjusting (540) the pressure equalization device (20) comprises setting the coolant pressure between the coolant pressure requirement of the first vehicle fuel cell system (100) and the coolant pressure requirement of the second vehicle fuel cell system (200).
27. The method (500) according to clause 25 or 26, wherein the cooling circuit (10) is connected to an exhaust (110) of the first vehicle fuel cell system (100) and the method (500) comprises continuously adjusting (520) the coolant pressure by the cooling circuit (10) being connected to the exhaust (110) of the first vehicle fuel cell system (100), as the pressure of the exhaust (110) may continuously vary during operation.
28. The method (500) of clause 27, wherein the cooling circuit (10) is not connected to an exhaust (210) of the second vehicle fuel cell system (200).
29. The method (500) according to any clause 24, wherein automatically adjusting (540) the pressure equalization device (20) comprises setting a low coolant pressure before or during start-up and/or warm-up of the fuel cell system (100).

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A cooling system (1) for a vehicle fuel cell system (100), the cooling system (1) comprising a cooling circuit (10) and a pressure equalization device (20) for a coolant of the cooling circuit (10), wherein the pressure equalization device (20) is configured to automatically adjust the coolant pressure.

2. The cooling system (1) of claim 1, wherein the pressure equalization device (20) comprises a drive (22m), such as an electric motor, for automatically adjusting the coolant pressure.

3. The cooling system (1) of claim 1 or 2, wherein the pressure equalization device (20) comprises
- a first portion (20e) adapted to be in fluid communication with an exhaust (110) of the vehicle fuel cell system (100),
- a second portion (20c) adapted to be in fluid communication with the cooling circuit (10), and
- a separator (20s) that is arranged to separate the first portion (20e) and the second portion (20c).

4. The cooling system (1) of claim 3, wherein the pressure equalization device (20) is configured such that the separator (20s) may be pre-tensioned towards the first portion (20e) or towards the second portion (20c), said pre-tension being independent from any force affecting the separator (20s) as a result of a fluid communication between the first portion (20e) and the exhaust (110), and wherein the pressure equalization device (20) comprises an automatic pressurizing assembly (22) that is adapted to automatically adjust the pre-tension of the separator (20s).

5. The cooling system (1) of claim 5, wherein the automatic pressurizing assembly (22) comprises a threaded actuator (22t) for adjusting the pre-tension of the separator (20s), wherein the pressure equalization device (20) is configured such that the threaded actuator (22t) may be automatically operated.

6. The cooling system (1) of claim 5, wherein the automatic pressurizing assembly (22) comprises a resilient member (22r) that is arranged to pre-tension the separator (20s), wherein a rotation of the threaded actuator (22t) adjusts a pre-tension of the resilient member (22r).

7. The cooling system (1) of any preceding claim, wherein the pressure equalization device (20) comprises an exhaust interface (24) for connection to an exhaust (110) of the vehicle fuel cell system (100).

8. The cooling system (1) of any preceding claim, comprising or connected to a control unit (50) that is able to determine a coolant pressure requirement of the vehicle fuel cell system (100) and is able to operate the pressure equalization device (20) based on the coolant pressure requirement.

9. A vehicle fuel cell system (100) comprising the cooling system (1) of any preceding claim.

10. A multiple vehicle fuel cell system (300) comprising a first vehicle fuel cell system (100), a second vehicle fuel cell system (200) and the cooling system (1) according to any of claims 1 to 8.

11. The multiple vehicle fuel cell system (300) of claim 10, comprising a single cooling circuit (10).

12. A vehicle (400) comprising the vehicle fuel cell system (100) of claim 9 or the multiple vehicle fuel cell system (300) of claim 10 or 11.

13. A method (500) of adjusting a coolant pressure of a cooling circuit (10) for a vehicle fuel cell system (100) comprising automatically adjusting (540) a pressure equalization device (20).

14. The method (500) of claim 13, wherein automatically adjusting (540) the pressure equalization device (20) comprises operating a drive (22m) such as an electric motor.

15. The method (500) according to claim 13 or 14, comprising obtaining (530) from a control unit (50) a coolant pressure requirement of the vehicle fuel cell system (100) and on the basis thereof automatically adjusting (540) the pressure equalization device (20).

## Amended claims

### Amended claims in accordance with Rule 137(2) EPC.

1. A cooling system (1) for a vehicle fuel cell system (100), the cooling system (1) comprising a cooling circuit (10) and a pressure equalization device (20) for a coolant of the cooling circuit (10), wherein the pressure equalization device (20) comprises a drive (22m) and is configured to automatically adjust the coolant pressure.

2. The cooling system (1) of claim 1, wherein drive (22m) is an electric motor.

3. The cooling system (1) of claim 1 or 2, wherein the pressure equalization device (20) comprises
- a first portion (20e) adapted to be in fluid communication with an exhaust (110) of the vehicle fuel cell system (100),
- a second portion (20c) adapted to be in fluid communication with the cooling circuit (10), and
- a separator (20s) that is arranged to separate the first portion (20e) and the second portion (20c).

4. The cooling system (1) of claim 3, wherein the pressure equalization device (20) is configured such that the separator (20s) may be pre-tensioned towards the first portion (20e) or towards the second portion (20c), said pre-tension being independent from any force affecting the separator (20s) as a result of a fluid communication between the first portion (20e) and the exhaust (110), and wherein the pressure equalization device (20) comprises an automatic pressurizing assembly (22) that is adapted to automatically adjust the pre-tension of the separator (20s).

5. The cooling system (1) of claim 5, wherein the automatic pressurizing assembly (22) comprises a threaded actuator (22t) for adjusting the pre-tension of the separator (20s), wherein the pressure equalization device (20) is configured such that the threaded actuator (22t) may be automatically operated.

6. The cooling system (1) of claim 5, wherein the automatic pressurizing assembly (22) comprises a resilient member (22r) that is arranged to pre-tension the separator (20s), wherein a rotation of the threaded actuator (22t) adjusts a pre-tension of the resilient member (22r).

7. The cooling system (1) of any preceding claim, wherein the pressure equalization device (20) comprises an exhaust interface (24) for connection to an exhaust (110) of the vehicle fuel cell system (100).

8. The cooling system (1) of any preceding claim, comprising or connected to a control unit (50) that is able to determine a coolant pressure requirement of the vehicle fuel cell system (100) and is able to operate the pressure equalization device (20) based on the coolant pressure requirement.

9. A vehicle fuel cell system (100) comprising the cooling system (1) of any preceding claim.

10. A multiple vehicle fuel cell system (300) comprising a first vehicle fuel cell system (100), a second vehicle fuel cell system (200) and the cooling system (1) according to any of claims 1 to 8.

11. The multiple vehicle fuel cell system (300) of claim 10, comprising a single cooling circuit (10).

12. A vehicle (400) comprising the vehicle fuel cell system (100) of claim 9 or the multiple vehicle fuel cell system (300) of claim 10 or 11.

13. A method (500) of adjusting a coolant pressure of a cooling circuit (10) for a vehicle fuel cell system (100) comprising automatically adjusting (540) a pressure equalization device (20), wherein automatically adjusting (540) the pressure equalization device (20) comprises operating a drive (22m)

14. The method (500) of claim 13, wherein the drive (22m) is an electric motor.

15. The method (500) according to claim 13 or 14, comprising obtaining (530) from a control unit (50) a coolant pressure requirement of the vehicle fuel cell system (100) and on the basis thereof automatically adjusting (540) the pressure equalization device (20).
